# EUROPEAN PATENT SPECIFICATION

(11) **EP 2 365 562 B1**
(45) Date of publication and mention of the grant of the patent: **10.09.2014**
(21) Application number: 11156516.4
(22) Date of filing: 02.03.2011
(51) Int. Cl.: H01M 2/26, H01M 10/42, H01M 2/02, H01M 10/052

(54) **Electrode assembly and secondary battery using the same**
Elektrodenanordnung und Sekundärbatterie damit
Ensemble d'électrode et batterie secondaire en disposant

(30) Priority: 04.03.2010 US 310603 P; 02.12.2010 US 959306
(43) Date of publication of application: 14.09.2011
(73) Proprietor: Samsung SDI Co., Ltd., Suwon-si, Gyeonggi-do 443-731 (KR)
(72) Inventor: Heo, Na-Ri, Gyeonggi-do (KR)
(74) Representative: Gulde & Partner

(56) References cited:
- WO-A1-2006/068431
- US-A1- 2008 008 910
- US-A1- 2008 070 115
- US-A1- 2009 176 155

## Description

The present invention relates to an electrode assembly and a secondary battery using the same, and more particularly, to an electrode assembly and a secondary battery using the same that are capable of simplifying a process and saving cost by modifying the form of an electrode tab of an outermost substrate among electrode plates.

### Description of the Related Art

Recently, as portable electronic apparatuses have been miniaturized and lightened, a lot of researches of a secondary battery used as its driving power source are being executed. In particular, as lightening and high-functioning of portable wireless apparatus products including a cellular phone, a notebook computer, a personal digital assistant (PDA), etc. are in progress, the importance of the secondary battery used as driving power sources of the products is being remarkably emphasized.

Since the secondary battery can repetitively be used through repetition of charging and discharging, the secondary battery is more economical than a primary battery. Further, since the miniaturization and high-capacity of the secondary battery can be implemented, thus, the secondary battery has high operating voltage and high energy density per weight, the secondary battery is widely being used in high-tech electronic apparatus fields.

In particular, a lithium secondary battery, which has operating voltage of 3.7V, has a tendency to rapidly extend in an aspect in that it is three times higher than a nickel-cadmium battery or a nickel-hydride battery which is primarily used as a power source for a portable electronic equipment and high in energy density per unit weight.

In general, a demand for a secondary battery such as a can-type battery and a pouch-type battery of a thin thickness which can be applied to the cellular phone is high in a shape aspect and a demand for a secondary battery such as a lithium polymer battery having excellent energy density, discharge voltage, and safety is high in a material aspect.

In the can-type or pouch-type battery, an electrode assembly, electrode tabs extending from the electrode assembly, and electrode leads welded to the electrode tabs are received in a can or a pouch. That is, the electrode assembly has a structure in which an anode plate, a cathode plate, and a separator that is interposed therebetween and insulates them from each other are sequentially laminated or wound.

In addition, while the electrode tabs are individually extended and fused from the anode plate and the cathode plate of the electrode assembly, the electrode tabs are electrically connected with each of anode and cathode electrode leads and a part of each electrode tab is exposed outside the can or pouch. The exposed electrode lead is electrically connected with a protection circuit module in a subsequent process.

An example of such an electrode assembly is disclosed in US 2008/0008910.

However, as such, the electrode tabs extending from each of the anode plate and the cathode plate of the electrode assembly are fused and thereafter, when each of the electrode tabs is connected with the electrode lead, a process is complicated and the electrode tab and the electrode lead may be separated from each other while the subsequent process is performed.

### SUMMARY OF THE INVENTION

Accordingly, an embodiment of the present invention provides an electrode assembly and a secondary battery using the same that are capable of omitting a process to attaching an additional electrode lead by increasing the thickness of an outermost substrate among electrode plates and the size of an electrode tab to use electrodes tabs of internal substrates as an electrode lead while tying the electrode tabs of the internal substrates.

According to the present invention there is provided an electrode assembly comprising:
at least one first outermost electrode plates and second outermost electrode plates having separators in between, each of the first and second outermost electrode plates having an electrode tab extending therefrom;
one or more of first and second intermediate electrode plates having separators in between, each of the first and second intermediate electrode plates having an electrode tab extending therefrom;
wherein the first outermost electrode plates are disposed at an outermost side in the electrode assembly with respect to the first intermediate electrode plates, and the second outermost electrode plates are disposed at an outermost side in the electrode assembly with respect to the second intermediate electrode plates; and
wherein the first outermost electrode tab and/or the second outermost electrode tab is directly coupled to a protection circuit module so as to provide electrode leads.

The at least one of first and second outermost electrode plates may further comprise a pair of first outermost electrode plates and a pair of second outermost electrode plates and the pair of first and second outermost electrode plates is disposed on an outermost side in the electrode assembly with respect to the first and second intermediate electrodes plates respectively.

Preferably, the first intermediate electrode tabs are sized to be covered by at least one of the first outermost electrode tabs, and/or the second intermediate electrode tabs are sized to be covered by at least one of the second outermost electrode tabs.

The plurality of first and/or second outermost electrode plates maybe larger and/or thicker than the plurality of first and respectively second intermediate electrode plates.

Preferably, a thickness of the first outermost electrode plate and/or tabs and/or the second outermost electrode plate and/or tabs is in the range of 50 to 100 µm.

The width of the first outermost electrode tabs and/or the second outermost electrode tabs may be in the range of 5 to 40 mm.

The length of the first outermost electrode tabs and/or the second outermost electrode tabs may be 150% to 200% of the length of the first intermediate electrode tabs and respectively second intermediate electrode tabs.

The first intermediate electrode tabs are preferably coupled each other and coupled to the first outermost electrode tabs and/or the second intermediate electrode tabs are preferably coupled each other and coupled to the second outermost electrode tabs.

The first outermost electrode tabs may be welded to the first intermediate electrode tabs and/or wherein the second outermost electrode tabs may be welded to the second intermediate electrode tabs.

The electrode assembly may further comprise a first insulating tape coupled to portions of the first outermost electrode tab and/or a second insulating tape coupled to portions of the second outermost electrode tab.

The first outermost and intermediate electrode plates may be anode plates.

The second outermost and intermediate electrode plates may be cathode plates.

The present invention further refers to a lithium secondary battery including the before mentioned electrode assembly. The battery may be a pouch-type battery. A portion of the first outermost electrode tab and a portion of the second outermost electrode tab may be exposed to an exterior of a battery case including the electrode assembly.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view showing a state in which an electrode assembly in a pouch case is disassembled according to an embodiment of the present invention.
FIG. 2 is a perspective view of a secondary battery according to an embodiment of the present invention.
FIG. 3 is a cross-sectional view taken along line A-A' of FIG. 2.
FIG. 4 is a cross-sectional schematic view taken along line B-B' of FIG. 2.

### DETAILED DESCRIPTION OF THE INVENTION

In the following detailed description, only certain exemplary embodiments of the present invention have been shown and described, simply by way of illustration. When an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

Hereinafter, an electrode assembly and a secondary battery using the same according to an embodiment of the present invention will be described in detail with reference to the accompanying drawings illustrating embodiments of the present invention.

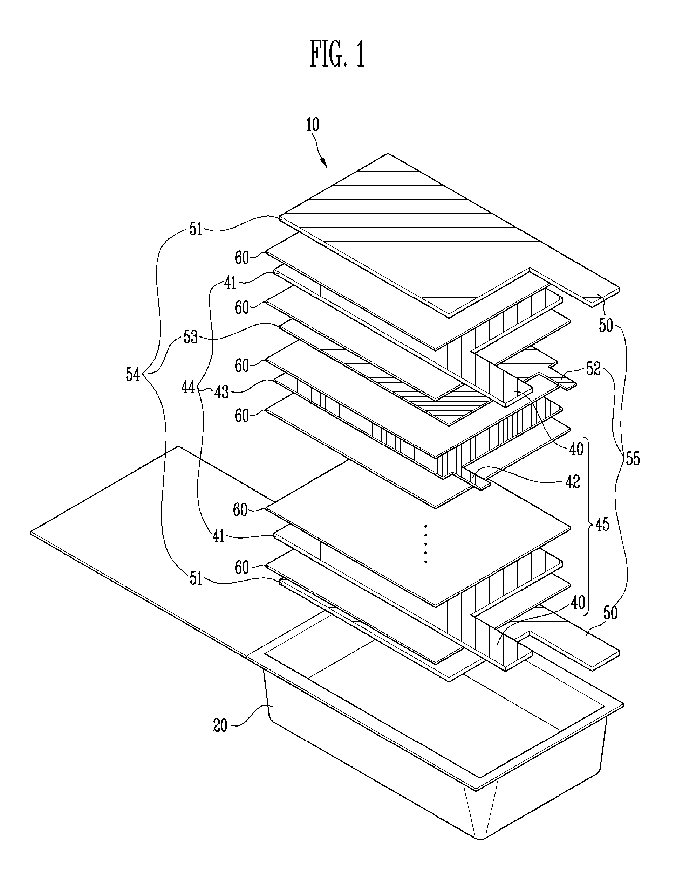

FIG. 1 is a perspective view showing a state in which an electrode assembly in a pouch case is disassembled according to an embodiment of the present invention.

Referring to FIG. 1, in an electrode assembly 10 includes an anode plate 54 and a cathode plate 44 to which an active material is applied and a separator 60 interposed therebetween that are laminated. Anode tabs 55 which extend from one side are formed on the anode plate 54 and cathode tabs 45 which extend from the other side in the same direction as the anode tabs 55 are formed on the cathode plate 44. The anode plate 54 and the cathode plate 44 include a pair of outermost anode plates 51 and a pair of outermost cathode plates 41 that are positioned at the outermost portion and a plurality of intermediate anode plates 53 and a plurality of intermediate cathode plates 43 that are interposed therebetween.

In the embodiment of the present invention, the outermost anode plate 51 is an anode plate 51 positioned at the outermost portion among the laminated anode plates 54 and the outermost cathode plate 41 is a cathode plate 41 positioned at the outermost portion among the laminated cathode plates 44. At this time, any one of a pair of outermost anode plates 51 or a pair of outermost cathode plate 41 may actually be the outermost portion of the electrode assembly 10, but in the embodiment of the present invention, a pair of outermost anode plates 51 are formed at the outermost portion of the electrode assembly 10.

The outermost anode plate 51 is thicker than the intermediate anode plate 53 and the outermost anode tab 50 may be larger than the intermediate anode tab 52. By this configuration, the outermost anode tab 50 can tie the intermediate anode tabs 52 of the intermediate anode plates 53 and in addition, the outermost anode tab 50 itself can serves as the electrode lead without additionally attaching an electrode lead electrically connected with a protection circuit module (not shown) at the time of forming a core pack.

In general, the thickness of the intermediate anode plate 53 is in the range of 12 to 30 µm and in the embodiment of the present invention, the thickness of the outermost anode plate 51 covering the intermediate anode plate 53 may be in the range of 50 to 100 µm. That is, when the outermost anode tab 50 attached to the outermost anode plate 51 has a thickness less than 50 µm, the outermost anode tab 50 has the thickness equal to or smaller than the intermediate anode tabs 52, such that the strength of the outermost substrate is deteriorated. In addition, when the outermost anode tab 50 has a thickness more than 100 µm, the outermost substrate becomes excessively thicker, such that interattachment is not easy and in addition, the secondary battery becomes thicker.

Further, the outermost cathode tab 40 is also thicker than the intermediate cathode tabs 42 similarly as the outermost anode tab 50. In general, the thickness of the intermediate cathode plate 43 is in the range of 8 to 20 µm and the thickness of the outermost cathode plate 41 covering the intermediate cathode plate 43 may be in the range of 50 to 100 µm. Herein, the outermost cathode tab 40 and the intermediate cathode tabs 42 extend in the same direction as the outermost anode tab 50 and the intermediate anode tabs 52, but to the other side so as not to be overlapped with the outermost anode tab 50 and the intermediate anode tabs 52 that extend to one side.

The anode plate 54 and the cathode plate 44 are generally formed by applying and filling the active material to and into a metallic substrate, and drying, roll-pressing, and cutting it although they may a little differently be formed depending on the type of the secondary battery. The anode plate 54 and the cathode plate 44 are fabricated by coating an aluminum metal foil and a copper metal foil with slurries, respectively and drying them. At this time, the slurries include the active materials of the anode plate 54 and the cathode plate 44 and a fixing agent which allows the active materials to adhere to the metal foils. In the case of a lithium secondary battery, an oxide containing lithium is primarily used as an anode active material and any one of hard carbon, soft carbon, graphite, and a carbon substance may primarily be used as a cathode active material, but the present invention is not limited to the lithium secondary battery.

The separator 60 is interposed between the anode plate 54 and the cathode plate 44. An insulating thin film having high ion permeability and high mechanical strength is used. Diameters of pores of the separator 60 are generally in the range of 0.01 to 10 µm and thicknesses thereof are generally in the range of 5 to 300 µm. A sheet or a non-woven fabric made of an olefinic polymer such as chemical-resistant and hydrophobic polypropylene, a glass fiber, or polyethylene may be used as the separator 60, for example. At this time, in the case in which a solid electrolyte such as a polymer, etc. is used as an electrolyte, the solid electrolyte may also serve as the separator 60.

In addition, a pouch case 20 has a receiving space which can house the electrode assembly 10. The pouch case 20 is generally formed on the top and bottom of an aluminum thin-film to have a laminate structure. An inner surface of the pouch case 20 is made of a heat adhesive resin.

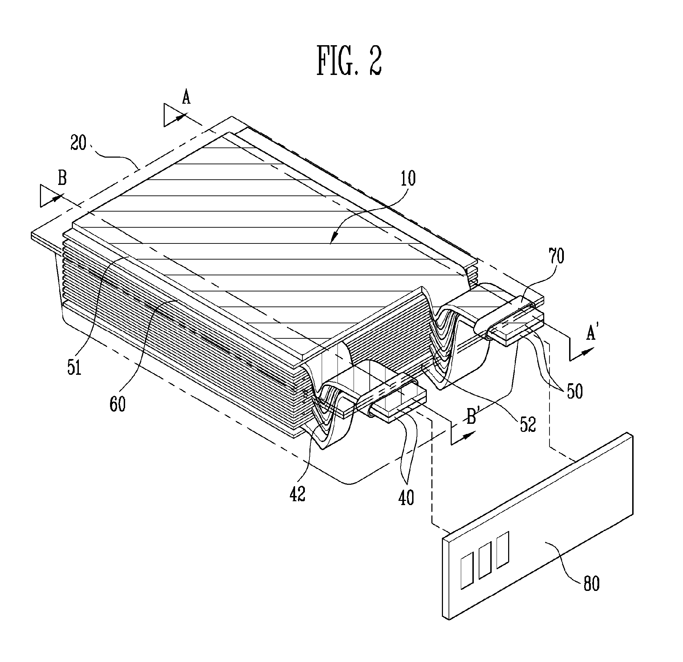

FIG. 2 is a perspective view of a secondary battery according to an embodiment of the present invention.

Referring to FIG. 2, when the electrode assembly 10 is received in the receiving space of the pouch case 20, a pair of outermost anode tabs 50 and a pair of outermost cathode tabs 40 are partially exposed outside the pouch case 20. At this time, an insulating tape 70 for ensuring an electrical insulation state while increasing airtightness with the pouch case 20 is attached to the outermost electrode tabs 40 and 50 that are in contact with the pouch case 20.

As described above, the pouch case 20 is generally formed on the top and bottom of the aluminum thin-film to have a laminate structure covered with nylon, a synthesis resin such as polypropylene or polyethylene, etc. The inner surface of the pouch case 20 is made of the heat adhesive resin for airtightness. As a result, the heat adhesive resin coated on the inner surface of the pouch case 20 is inter-fused by heating and pressing to make the pouch case 20 airtight.

Since a pair of outermost anode tabs 50 and a pair of outermost cathode tabs 40 are partially exposed outside the pouch case 20 while tying the intermediate anode tabs 52 and the intermediate cathode tabs 42 positioned therein to serve as the electrode lead, they have sizes enough to cover the intermediate anode tabs 52 and the intermediate cathode tabs 42.

Preferably, the widths of the outermost anode tab 50 and the outermost cathode tab 40 should be in the range of 5 to 40 mm. Since the widths of the general intermediate anode tab 52 and cathode tabs 42 are in the range of 4 to 7 mm, the widths of the outermost anode tab 50 and the outermost cathode tab 40 are preferably in the range of 5 to 40 mm enough to cover the intermediate anode and cathode tabs. Further, the lengths of the outermost anode tab 50 and the outermost cathode tab 40 should be 150% to 200% of the lengths of the intermediate anode tab 52 and the intermediate cathode tab 42, respectively.

When the lengths of the outermost anode tab 50 and the outermost cathode tab 40 are formed less than 150% to 200% of the lengths of the intermediate anode tab 52 and the intermediate cathode tab 42, respectively, they are too short so as not to sufficiently cover the intermediate anode tab 52 and the intermediate cathode tab 42. In addition, when the lengths of the outermost anode tab 50 and the outermost cathode tab 40 are more than 200% of the lengths of the intermediate anode tab 52 and the intermediate cathode tab 42, respectively, unnecessary outermost anode tab 50 and cathode tab 40 positioned inside or outside the pouch case are lengthened to thereby occupy a space.

At this time, each of a pair of outermost anode tabs 50 and a pair of outermost cathode tabs 40 may be attached by laser welding. By this configuration, since the outermost anode tab 50 and the outermost cathode tab 40 cover the intermediate anode tabs 52 and the intermediate cathode tabs 42 interposed therebetween and are partially exposed outside the pouch case 20, the outermost anode tab 50 and the outermost cathode tab 40 may serve as the electrode lead.

In this FIG. 2, the outermost anode tab 50 and the outermost cathode tab 40 may be directly coupled to a protective circuit module 80 without additional leads.

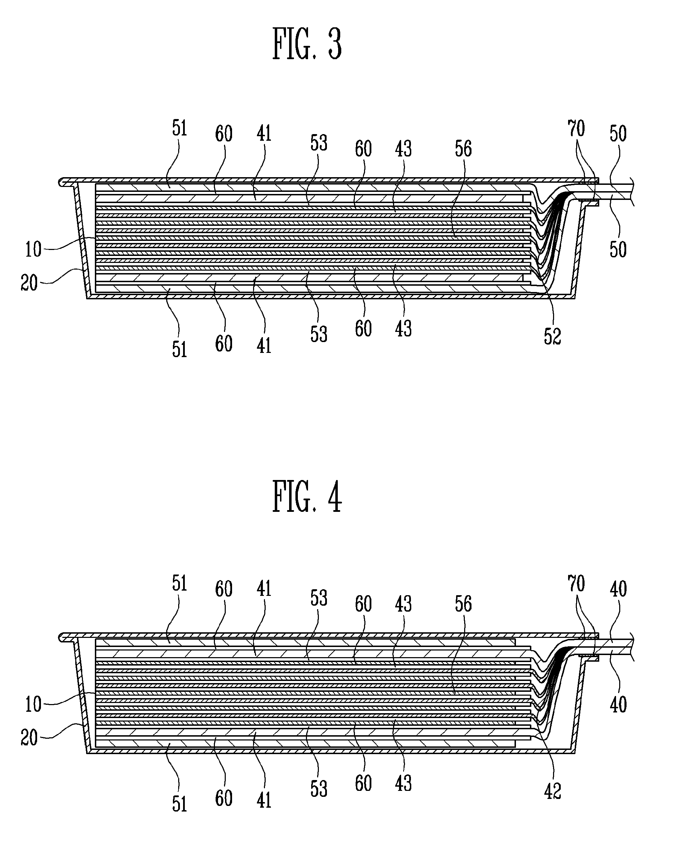

FIG. 3 is a cross-sectional view taken along line A-A' of FIG. 2.

Referring to FIG. 3, in the electrode assembly 10 positioned in the pouch case 20, the anode plate 54, the separator 60, and the cathode plate 44 are sequentially laminated. The cathode plate 44 is a little larger than the anode plate 54 and the separator 60 is a little larger than the cathode plate 44 and is interposed between the anode plate 54 and the cathode plate 44. That is, the anode plate 54, the cathode plate 44, and the separator 60 are formed according to size. In general, the separator 60 of the laminate-type electrode assembly 10 is fabricated larger than the anode plate 54 and the cathode plate 44 in order to prevent short-circuit by a contact between the anode plate 54 and the cathode plate 44. Further, the anode plate 54 is fabricated a little smaller than the cathode plate 44 by considering a lithium ion precipitation phenomenon intermittently generated in the cathode plate 44 at the time of charging.

The lamination form of the electrode assembly 10 will now be described in more detail. The anode plate 56 is positioned at the center of the electrode assembly 10. The anode plates 51 are positioned even at both outermost portions of the electrode assembly 10 and are vertically symmetric to each other on the basis of the central anode plate 56. That is, the electrode assembly 10 has a structure in which a form in which the separator 60 are laminated at both sides of the central anode plate 56, the intermediate cathode plates 43 are laminated at both sides of the separator 60, and the intermediate anode plates 53 are positioned at both sides of the intermediate cathode plate 43 is repeated.

In addition, an active material (not shown) is applied to the anode plate 56 positioned at the center of the electrode assembly 10, and both surfaces of the internal intermediate anode plates 53 and the internal intermediate cathode plates 43 and the active material is applied to only the inner surface of the outermost anode plate 51.

In the electrode assembly 10 having the above-mentioned lamination structure, a pair of outermost anode plate 51 is thicker than the intermediate anode electrodes 53 and the outermost anode tab 50 has a larger width and a larger length. Therefore, the outermost plate may serves as the electrode lead while covering and tying the intermediate anode tabs 52.

At this time, the insulating tape 70 is attached to a portion where the outermost anode tab 50 is exposed outside the pouch case 20 that is airtight and is in contact with the pouch case 20. That is, when the pouch case 20 is airtight, the insulating tape 70 insulating the pouch case 20 and the outermost anode tab 50 from each other is included. When the heat adhesive resin is fused onto the inner surface of the pouch case 20, the insulating tape 70 prevents short-circuit of the outermost electrode tabs 40 and 50 and the aluminum thin film. Meanwhile, the insulating tape 70 should not hinder the airtight state of the pouch case 20 and should not serve as a route for moisture permeation or outflow of electrolytes.

FIG. 4 is a cross-sectional schematic view taken along line B-B' of FIG. 2.

Referring to FIG. 4, in the same structure as FIG. 3, the intermediate cathode tabs 42 are covered by a pair of outermost cathode tabs 40. Herein, the outermost cathode plate 41 is positioned in the outermost anode plate 51 with the separator 60 interposed therebetween. The intermediate cathode tabs 42 and the outermost cathode tab 40 are formed at a location where they are not overlapped with an area where the intermediate anode tabs 52 and the outermost anode tab 50 are positioned.

While the insulating tape 70 is attached to a portion of a pair of outermost cathode tab 40 that are in contact with the pouch case 20, a pair of outermost cathode tabs 40 cover the intermediate cathode tabs 42 positioned therein. By this configuration, as a process of manufacturing the electrode assembly 10 is simpler, productivity is improved and it is possible to save cost for an additional electrode lead substrate.

In the above-mentioned embodiment, of, course, the anode plate is positioned at the center and the anode plate is positioned at both outermost sides of the electrode assembly, but the cathode plate is positioned at the center and the cathode plate is positioned at both outermost sides of the electrode assembly.

Further, in the above-mentioned embodiment, although the pouch-type secondary battery has been described, the present invention is not limited thereto. In addition, of course, the present invention can be applied to jelly role type, cylindrical type, and zigzag type electrode assemblies having a structure in which a long sheet type anode plate and a long sheet type cathode plate are wound with a separator interposed therebetween.

As described above, according to an embodiment of the present invention, a process of attaching an additional electrode lead is omitted by increasing the thickness of an outermost substrate among electrode plates and the size of an electrode tab to tie electrode tabs of internal substrates and use them as an electrode lead. Therefore, as the process is simpler, productivity is improved and it is possible to save cost for an additional electrode lead substrate.

## Claims

1. An electrode assembly (10) comprising:
at least one first outermost electrode plates (41) and second outermost electrode plates (51) having separators (60) in between, each of the first and second outermost electrode plates (41, 51) having an electrode tab (40, 50) extending therefrom;
one or more of first and second intermediate electrode plates (43, 53) having separators (60) in between, each of the first and second intermediate electrode plates (43, 53) having an electrode tab (42, 52) extending therefrom;
wherein the first outermost electrode plates (41) are disposed at an outermost side in the electrode assembly (10) with respect to the first intermediate electrode plates (43), and the second outermost electrode plates (51) are disposed at an outermost side in the electrode assembly (10) with respect to the second intermediate electrode plates (53); and
wherein the first outermost electrode tab (40) and/or the second outermost electrode tab (50) is directly coupled to a protection circuit module so as to provide electrode leads.

2. The electrode assembly (10) of claim 1, wherein at least one of the first and second outermost electrode plates (41, 51) comprise a pair of first outermost electrode plates (41) and a pair of second outermost electrode plates (51) and the pair of first and second outermost electrode plates (41, 51) is disposed on an outermost side in the electrode assembly (10) with respect to the first and second intermediate electrodes plates (43, 53) respectively.

3. The electrode assembly (10) of any one of the preceding claims, wherein the first intermediate electrode tabs (42) are sized to be covered by at least one of the first outermost electrode tabs (40),
and/or the second intermediate electrode tabs (52) are sized to be covered by at least one of the second outermost electrode tabs (50).

4. The electrode assembly (10) of any one of the preceding claims, wherein the plurality of first and/or second outermost electrode plates (41, 51) are larger and/or thicker than the plurality of first and respectively second intermediate electrode plates (43, 53).

5. The electrode assembly (10) of any one of the preceding claims, wherein a thickness of the first outermost electrode plate and/or tabs (40) and/or the second outermost electrode plate and/or tabs (50) is in the range of 50 to 100 µm.

6. The electrode assembly (10) of any one of the preceding claims, wherein the width of the first outermost electrode tabs (40) and/or the second outermost electrode tabs (50) is in the range of 5 to 40 mm.

7. The electrode assembly (10) of any one of the preceding claims, wherein the length of the first outermost electrode tabs (40) and/or the second outermost electrode tabs (50) is 150% to 200% of the length of the first intermediate electrode tabs (42) and respectively second intermediate electrode tabs (52).

8. The electrode assembly (10) of any of the preceding claims, wherein the first intermediate electrode tabs (42) are coupled each other and coupled to the first outermost electrode tabs (40) and/or wherein the second intermediate electrode tabs (52) are coupled each other and coupled to the second outermost electrode tabs (50).

9. The electrode assembly (10) of any of the preceding claims, wherein the first outermost electrode tabs (42) are welded to the first intermediate electrode tabs (42) and/or wherein the second outermost electrode tabs (50) are welded to the second intermediate electrode tabs (52).

10. The electrode assembly (10) of any one of preceding claims, further comprising a first insulating tape (70) coupled to portions of the first outermost electrode tab (40) and/or a second insulating tape (70) coupled to portions of the second outermost electrode tab (50).

11. The electrode assembly (10) of any one of claims, wherein the first outermost and intermediate electrode plates (51, 53) are anode plates.

12. The electrode assembly of any one of claims, wherein the second outermost and intermediate electrode plates (41, 43) are cathode plates.

13. Lithium secondary battery including an electrode assembly (10) according to any one of claims 1 through 12.

14. Lithium secondary battery of claim 13, wherein the battery is a pouch-type battery.

15. The Lithium secondary battery of claim 13 or 14, wherein a portion of the first outermost electrode tab (50) and a portion of the second outermost electrode tab (40) is exposed to an exterior of a battery case including the electrode assembly (10).

## Patentansprüche

1. Elektrodenanordnung (10), aufweisend:
zumindest eine erste äußerste Elektrodenplatte (41) und zweite äußerste Elektrodenplatte (51), die Separatoren (60) zwischen sich aufweisen, wobei jede der ersten und zweiten äußersten Elektrodenplatte (41, 51) eine Elektrodenfahne (40, 50) aufweist, die sich davon erstreckt;
eine oder mehrere erster und zweiter dazwischen liegender Elektrodenplatten (43, 53), die Separatoren (60) zwischen sich aufweisen, wobei jede der ersten und zweiten dazwischen liegenden Elektrodenplatten (43, 53) eine Elektrodenfahne (42, 52) aufweist, die sich davon erstreckt;
wobei die ersten äußersten Elektrodenplatten (41) auf einer äußersten Seite in der Elektrodenanordnung (10) bezüglich der ersten dazwischen liegenden Elektrodenplatten (43) angeordnet sind, und die zweiten äußersten Elektrodenplatten (51) auf einer äußersten Seite in der Elektrodenanordnung (10) bezüglich der zweiten dazwischen liegenden Elektrodenplatten (53) angeordnet sind; und
wobei die erste äußerte Elektrodenfahne (40) und/oder die zweite äußerste Elektrodenfahne (50) direkt mit einem Schutzschaltungsmodul gekoppelt ist, um Elektrodenleitungen bereitzustellen.

2. Elektrodenanordnung (10) nach Anspruch 1, wobei zumindest eine der ersten und zweiten äußersten Elektrodenplatte (41, 51) ein Paar erster äußerster Elektrodenplatten (41) und ein Paar zweiter äußerster Elektrodenplatten (51) aufweiset und das Paar erster und zweiter äußerster Elektrodenplatten (41, 51) auf einer äußersten Seite in der Elektrodenanordnung (10) bezüglich jeweils der ersten und zweiten dazwischen liegenden Elektrodenplatten (43, 53) angeordnet ist.

3. Elektrodenanordnung (10) nach einem der vorhergehenden Ansprüche, wobei die ersten dazwischen liegenden Elektrodenfahnen (42) so bemessen sind, dass sie von zumindest einer der ersten äußersten Elektrodenfahnen (40) bedeckt werden, und/oder die zweiten dazwischen liegenden Elektrodenfahnen (52) so bemessen sind, dass sie von zumindest einer der zweiten äußersten Elektrodenfahnen (50) bedeckt werden.

4. Elektrodenanordnung (10) nach einem der vorhergehenden Ansprüche, wobei die Vielzahl erster und/oder zweiter äußerster Elektrodenplatten (41, 51) größer und/oder dicker als die Vielzahl erster bzw. zweiter dazwischen liegender Elektrodenplatten (43, 53) sind.

5. Elektrodenanordnung (110) nach einem der vorhergehenden Anspruche, wobei eine Dicke der ersten äußersten Elektrodenplatte und/oder -fahnen (40) und der zweiten äußersten Elektrodenplatte und/oder -fahnen (50) im Bereich von 50 bis 100 µm liegt.

6. Elektrodenanordnung (10) nach einem der vorhergehenden Ansprüche, wobei die Breite der ersten äußersten Elektrodenfahnen (40) und/oder der zweiten äußersten Elektrodenfahnen (50) im Bereich von 5 bis 40 mm liegt.

7. Elektrodenanordnung (10) nach einem der vorhergehenden Ansprüche, wobei die Länge der ersten äußersten Elektrodenfahnen (40) und/oder der zweiten äußersten Elektrodenfahnen (50) 150% bis 200% der Länge der ersten dazwischen liegenden Elektrodenfahnen (42) bzw. zweiten dazwischen liegenden Elektrodenfahnen (52) ist.

8. Elektrodenanordnung (10) nach einem der vorhergehenden Ansprüche, wobei die ersten dazwischen liegenden Elektrodenfahnen (42) miteinander gekoppelt sind und mit ersten äußersten Elektrodenfahnen (40) gekoppelt sind und/oder wobei die zweiten dazwischen liegenden Elektrodenfähnen (52) miteinander gekoppelt sind und mit den zweiten äußersten Elektrodenfahnen (50) gekoppelt sind.

9. Elektrodenanordnung (10) nach einem der vorhergehenden Ansprüche, wobei die ersten äußersten Elektrodenfahnen (42) mit den ersten dazwischen liegenden Elektrodenfahnen (42) verschweißt sind und/oder wobei die zweiten äußersten Elektrodenfahnen (50) mit den zweiten dazwischen liegenden Elektrodenfahnen (52) verschweißt sind.

10. Elektrodenanordnung (10) nach einem der vorhergehenden Ansprüche, weiterhin aufweisend ein erstes Isolierband (70), das mit Abschnitten der ersten äußersten Elektrodenfahne (40) gekoppelt ist, und/oder ein zweites Isolierband (70), das mit Abschnitten der zweiten äußersten Elektrodenfahne (50) gekoppelt ist.

11. Elektrodenanordnung (10) nach einem der Ansprüche, wobei die ersten äußersten und dazwischenliegenden Elektrodenplatten (51, 53) Anodenplatten sind.

12. Elektrodenanordnung nach einem der Ansprüche, wobei die zweiten äußersten und dazwischenliegenden Elektrodenplatten (41, 43) Kathodenplatten sind.

13. Lithiumsekundärbatterie, aufweisen eine Elektrodenanordnung (10) nach einem der Ansprüche 1 bis 12.

14. Lithiumsekundärbatterie nach Anspruch 13, wobei die Batterie eine beutelförmige Batterie ist.

15. Lithiumsekundärbatterie nach Anspruch 13 oder 14, wobei ein Abschnitt der ersten äußersten Elektrodenfahne (50) und ein Abschnitt der zweiten äußersten Elektrodenfahne (40) zu einer Außenseite eines das die Elektrodenanordnung (10) aufweist, hin freiliegt.

## Revendications

1. Ensemble d'électrodes (10) comprenant :
au moins des premières électrodes planes (41) situées le plus à l'extérieur et des secondes électrodes planes (51) situées le plus à l'extérieur ayant des séparateurs (60) entre elles, chacune des premières et secondes électrodes planes (41, 51) situées le plus à l'extérieur ayant une longuette d'électrode (40, 50) s'étendant à partir de cette derrière ;
une ou plusieurs des premières et secondes électrodes planes intermédiaires (43, 53) ayant des séparateurs (60) entre elles, chacune des première et secondes électrodes planes intermédiaires (43, 53) ayant une longuette d'électrode (42, 52) s'étendant à partir de cette dernière ;
dans lequel les premières électrodes planes (41) situées le plus à l'extérieur sont disposées au niveau du côté le plus à l'extérieur dans l'ensemble d'électrodes (10) par rapport aux premières électrodes planés intermédiaires (43), et les secondes électrodes planes (51) situées le plus à l'extérieur sont disposées du côté le plus à l'extérieur dans l'ensemble d'électrodes (10) par rapport aux secondes électrodes planes intermédiaires (53) ; et
dans lequel la première longuette d'électrode située le plus à l'extérieur (40) et/ou la seconde languette d'électrode située le plus à l'extérieur (50) est directement couplée à un module de circuit de protection afin de fournir des tiges d'électrode.

2. Ensemble d'électrodes (10) selon la revendication 1, dans lequel au moins l'une des premières et secondes électrodes planes (41, 51) situées le plus à l'extérieur comprend une paire de premières électrodes planes (41) situées le plus à l'extérieur et une paire de secondes électrodes planes (51) situées le plus à l'extérieur et la paire de premières et secondes électrodes planes (41, 51) situées le plus à l'extérieur est disposée du côté le plus à l'extérieur dans l'ensemble d'électrodes (10) par rapport aux premières et secondes électrodes planes intermédiaires (43, 53) respectivement.

3. Ensemble d'électrodes (10) selon l'une quelconque des revendications précédentes, dans lequel les premières languettes d'électrode intermédiaire (42) sont dimensionnées pour être recouvertes par au moins l'une des premières languettes d'électrode (40) situées le plus à l'extérieur,
et/ou les secondes languettes d'électrodes intermédiaire (52) sont dimensionnées pour être recouvertes par au moins l'une des secondes languettes d'électrode (50) situées le plus à l'extérieur.

4. Ensemble d'électrodes (10) selon l'une quelconque des revendication précédentes, dans lequel la plurality de premières et/ou secondes électrodes planes (41, 51) situées le plus à l'extérieur sont plus grandes et/ou plus épaisses que la plurality de premières et respectivement secondes électrodes planes intermédiaires (43, 53).

5. Ensemble d'électrodes (10) selon l'une quelconque des revendication précédentes, dans lequel une épaisseur de la première électrode plane située le plus à l'extérieur et/ou des languettes (40) et/ou de la seconde électrode plane située le plus à l'extérieur et/ou des languettes (50) est de l'ordre de 50 à 100 µm.

6. Ensemble d'électrodes (10) selon l'une quelconque des revendications précédentes, dans lequel la largeur des premières languettes d'électrode (40) situées le plus à l'extérieur et/ou des secondes languettes d'électrode (50) situées le plus à l'extérieur est de l'ordre de 5 à 40 mm.

7. Ensemble d'électrodes (10) selon l'une quelconque des revendications précédentes, dans lequel la longueur des premières languettes d'électrode (40) situées le plus à l'extérieur et/ou des secondes languettes d'électrode (50) situées le plus à l'extérieur représente de 150 % à 200 % de la longueur des premières languettes d'électrode intermédiaire (42) et respectivement des secondes languettes d'électrode intermédiaire (52).

8. Ensemble d'électrodes (10) selon l'une quelconque des revendications précédentes, dans lequel les premières languettes d'électrode intermédiaire (42) sont couplées entre elles et couplées aux premières languette d'électrode (40) situées le plus à l'extérieur et/ou dans lequel les secondes languettes d'électrode intermédiaire (52) sont couplées entre elles et couplées aux secondes languettes d'électrode (50) situées le plus à l'extérieur.

9. Ensemble d'électrodes (10) selon l'une quelconque des revendications précédentes, dans lequel les premières languettes d'électrode (42) situées le plus à l'extérieur sont soudées aux premières languettes d'électrode intermédiaire (42) et/ou dans lequel les secondes languettes d'électrode (50) situées le plus à l'extérieur sont soudées aux secondes languettes d'électrodes intermédiaire (52).

10. Ensemble d'électrodes (10) selon l'une quelconque des revendications précédentes, comprenant en outre une première bande isolante (70) couplée aux parties de la première languette d'électrode (40) située le plus à l'extérieur et/ou une seconde bande isolante (70) couplée aux parties de la seconde languette d'électrode (50) située le plus à l'extérieur.

11. Ensemble d'électrodes (10) selon l'une quelconque des revendications précédentes, dans lequel les premières électrodes planes situées le plus à l'extérieur et intermédiaires (51, 53) sont des plaques d'anode.

12. Ensemble d'électrodes selon l'une quelconque des revendications précédentes, dans lequel les secondes électrodes planes situées le plus à l'extérieur et intermédiaires (41, 43) sont des plaques de cathode.

13. Batterie secondaire au lithium comprenant un Ensemble d'électrodes (10) selon l'une quelconque des revendication 1 à 12.

14. Batterie secondaire au lithium selon la revendication 13, dans laquelle la Batterie est une batterie de type poche.

15. Batterie secondaire au lithium selon la revendication 13 ou 14, dans laquelle une partie de la première languette d'électrode située le plus à l'extérieur (50) et une partie de la seconde languette d'électrode située le plus à l'extérieur (40) sont exposées à un extérieur d'un boîtier de batterie comprenant l'ensemble d'électrodes (10).
